# DEMANDE DE BREVET EUROPEEN

(11) **EP 4 838 500 A1**
(43) Date de publication de la demande: **11.11.2026**
(21) Numéro de dépôt: 26177348.5
(22) Date de dépôt: 07.05.2026
(51) Int. Cl.: G08G 1/01, G01C 21/30, G01C 21/36, G06V 20/58, G08G 1/056, G08G 1/0962, G08G 1/16

(54) **PROCÉDÉ DE DÉTECTION D'UN ÉTAT DE CIRCULATION À CONTRESENS**

(30) Priorité: 07.05.2025 FR 2504887
(71) Demandeur: RENAULT s.a.s., 92100 Boulogne-Billancourt (FR)
(72) Inventeur: CAMBLOR, Pablo, 47008 Valadolid (FR); GERNE, Stephane, 78084 GUYANCOURT (FR); LE-MEUR, Emmanuel, 06410 Biot (FR)
(74) Mandataire: Renault Group

(57) **Abrégé**

Procédé de détection d'un état de circulation à contresens, comprenant :
- une première étape (E1) de contrôle de la circulation d'un premier véhicule (V1) sur une route (R1) à double sens et à chaussées séparées, et
- une deuxième étape (E2) de contrôle d'absence de travaux dans l'environnement du premier véhicule, et
- une troisième étape (E3) de contrôle de présence d'un deuxième véhicule (V2) circulant sur la même chaussée (C12) que le premier véhicule et circulant dans un sens opposé au sens de circulation du premier véhicule, puis
- une quatrième étape (E4) de signalisation d'un état de circulation à contresens.

## Description

### Domaine Technique de l'invention

L'invention concerne un procédé de détection d'un état de circulation à contresens d'un véhicule automobile. L'invention porte aussi sur un véhicule automobile comprenant des moyens matériels et logiciels adaptés pour mettre en œuvre un tel procédé de détection.

### Etat de la technique antérieure

La circulation d'un véhicule automobile à contresens expose ce véhicule à un risque de choc frontal très violent avec un autre véhicule, et pose donc un problème de sécurité majeur. Afin d'améliorer la sécurité des véhicules automobile, on cherche à détecter de manière la plus fiable possible un état de circulation à contresens.

Lors de la mise en œuvre d'un procédé de détection d'un état de circulation à contresens, il existe généralement quatre issues possibles, dites « vrai positif », « faux positif », « vrai négatif » et « faux négatif ». Un « vrai positif » correspond à une détection à juste titre d'un état de circulation à contresens. Un « vrai négatif » correspond à une détection à juste titre d'une absence de circulation à contresens. Un « faux positif » correspond à une détection à tort d'un état de circulation à contresens. Une telle détection occasionne une alerte injustifiée pouvant générer une situation de stress et devrait donc être évitée autant que possible. Un « faux négatif » correspond à une absence de détection d'un état avéré de circulation à contresens.

Les véhicules modernes comprennent des moyens de géolocalisation par satellite, qui fournissent des données de positionnement du véhicule. Cependant, ces données de positionnement ont une précision insuffisante, et qui varie en fonction des conditions de propagation des signaux et de la visibilité des satellites. Ainsi, il est impossible de s'appuyer sur les données de positionnement fournies par les moyens de géolocalisation par satellite seuls pour détecter un état de circulation à contresens du véhicule, puisque le manque de précision des données de géolocalisation donnerait lieu à de nombreux faux positifs et négatifs.

Pour pallier cette imprécision, les véhicules comprennent également un système de positionnement, configuré pour déterminer une position précise du véhicule en utilisant les données de géolocalisation par satellite, éventuellement des données de localisation fournies par une centrale inertielle ou tout type de capteur de déplacement interne au véhicule (vitesse des roues, angle de direction...), et des données cartographiques. Parmi les traitements réalisés par le système de positionnement figure systématiquement un traitement dit de « map matching » (ou correspondance cartographique en français), qui positionne le véhicule sur le segment de route le plus proche de sa position courante dans le sens de circulation effectif du véhicule pour réduire les erreurs de positionnement. Par définition, détecter un état de circulation à contresens du véhicule en utilisant les données de positionnement fournies par le système de positionnement est alors également impossible.

Pour détecter un état de circulation à contresens, on connait un procédé de détection basé sur l'utilisation de caméras appartenant à l'infrastructure routière. Ces caméras sont couplées avec des modules de traitement d'images adaptés pour identifier automatiquement un véhicule circulant à contresens. Un tel procédé ne permet pas de signaler efficacement et rapidement l'état de circulation à contresens aux véhicules concernés. En effet, une telle signalisation requerrait des moyens communication entre lesdits véhicule et l'infrastructure routière. De plus, de nombreuses caméras devraient être déployées pour surveiller efficacement un réseau routier. Ce procédé est donc particulièrement complexe à mettre en œuvre et/ou insuffisamment efficace.

On connaît également, un procédé de détection basé sur la reconnaissance optique de panneau de sens interdit avec un moyen d'observation embarqué dans le véhicule. Un tel procédé entraine un grand nombre de « faux positifs », car il arrive fréquemment qu'un panneau de sens interdit reste observable par un moyen d'observation alors qu'il concerne des automobilistes situés sur d'autres routes ou d'autres chaussées que celle sur laquelle circule le véhicule.

Finalement, lorsqu'un procédé génère un nombre trop important de « faux positifs », il finit par être désactivé ou ignoré par un utilisateur du véhicule et devient donc totalement inefficace.

### Présentation de l'invention

Le but de l'invention est de fournir un procédé de détection d'un état de circulation à contresens d'un véhicule automobile remédiant aux inconvénients ci-dessus et améliorant les procédés de détection connus de l'art antérieur.

Plus précisément, un premier objet de l'invention est de fournir un procédé de détection d'un état de circulation à contresens particulièrement robuste, simple à mettre en œuvre, et évitant de générer des « faux positifs ».

### Résumé de l'invention

L'invention se rapporte à un procédé de détection d'un état de circulation à contresens, le procédé de détection comprenant :
- une première étape de contrôle de la circulation d'un premier véhicule sur une route à double sens et à chaussées séparées, et
- une deuxième étape de contrôle d'absence de travaux dans l'environnement du premier véhicule, et
- une troisième étape de contrôle de présence d'un deuxième véhicule circulant sur la même chaussée que le premier véhicule et circulant dans un sens opposé au sens de circulation du premier véhicule, puis
- si la circulation du premier véhicule sur une route à double sens et à chaussées séparées est confirmée, et si l'absence de travaux dans l'environnement du premier véhicule est confirmée, et si la présence d'un deuxième véhicule circulant sur la même chaussée que le premier véhicule et circulant dans un sens opposé au sens de circulation du premier véhicule est confirmée, une quatrième étape de signalisation d'un état de circulation à contresens.

La première étape peut comprendre une étape de contrôle, avec un moyen d'observation de l'environnement embarqué dans le premier véhicule, de la présence d'une première chaussée, d'une deuxième chaussée, et d'un élément de séparation tel qu'une rambarde, une glissière, une barrière ou un terreplein, l'élément de séparation séparant la première chaussée de la deuxième chaussée.

La première étape peut comprendre une étape de détermination de coordonnées géographiques représentatives de la position courante du véhicule avec un moyen de géolocalisation embarqué dans le premier véhicule, puis une étape de projection desdites coordonnées géographiques sur des données cartographiques enregistrées dans une mémoire d'une unité de contrôle électronique embarquée dans le premier véhicule, les données cartographiques contenant des informations relatives au type de route empruntée par le premier véhicule.

La deuxième étape peut comprendre une étape de contrôle, avec un moyen d'observation de l'environnement embarqué dans le premier véhicule, de l'absence d'équipements de travaux tels que des cônes de chantier, des marquages temporaires, des barrière temporaires, des panneaux de signalisation de travaux ou des engins de travaux.

La deuxième étape peut comprendre :
- une étape d'actualisation de données cartographiques enregistrées dans une mémoire d'une unité de contrôle électronique embarquée dans le premier véhicule avec un service d'actualisation destiné à signaler la présence de travaux, puis
- une étape de détermination de coordonnées géographiques représentatives de la position courante du véhicule avec un moyen de géolocalisation embarqué dans le premier véhicule, puis
- une étape de projection desdites coordonnées géographiques sur les données cartographiques.

La deuxième étape peut comprendre :
- une étape d'émission, par un moyen de communication embarqué dans le véhicule, d'un signal contenant des coordonnées géographiques représentatives d'une position courante du véhicule, puis
- une étape de réception, par un serveur distant, des coordonnées géographiques, puis
- une étape de projection desdites coordonnées géographiques sur des données cartographiques enregistrées dans une mémoire du serveur distant, lesdites données cartographiques contenant des informations relatives à des zones géographiques concernées par des travaux, puis
- une étape d'émission, par le serveur distant, d'une information binaire indiquant si le véhicule se trouve à l'intérieur d'une zone géographique concernée par des travaux, puis
- une étape de réception, par le moyen de communication, de ladite information binaire.

La troisième étape peut comprendre une étape de calcul d'une vitesse de rapprochement entre le premier véhicule et le deuxième véhicule avec un moyen d'observation de l'environnement embarqué dans le premier véhicule, puis une étape de comparaison de la vitesse de rapprochement avec la vitesse du premier véhicule.

La troisième étape peut comprendre une étape de reconnaissance optique d'une face avant du deuxième véhicule.

Le procédé de détection peut comprendre , suite à la troisième étape,
- une cinquième étape de contrôle de présence d'un troisième véhicule circulant sur la même chaussée que le premier véhicule et circulant dans un sens opposé au sens de circulation du premier véhicule, puis
- si la présence d'un troisième véhicule circulant sur la même chaussée que le premier véhicule et circulant dans un sens opposé au sens de circulation du premier véhicule est confirmée, une sixième étape de signalisation d'un état de circulation à contresens du premier véhicule ou, si la présence d'un troisième véhicule circulant sur la même chaussée que le premier véhicule et circulant dans le même sens de circulation que le premier véhicule est confirmée, une sixième étape de signalisation d'un état de circulation à contresens du deuxième véhicule.

Le procédé de détection peut comprendre en outre :
- une étape de détection d'un marquage au sol indiquant un état de circulation à contresens avec un moyen d'observation de l'environnement embarqué dans le véhicule, et/ou
- une étape de détection d'une face arrière d'un panneau de signalisation avec un moyen d'observation de l'environnement embarqué dans le véhicule, et/ou une étape de détection d'un premier panneau de sens interdit et d'un deuxième panneau de sens interdit de part et d'autre d'une trajectoire courante du véhicule avec un moyen d'observation de l'environnement embarqué dans le véhicule.

L'invention se rapporte également à un véhicule automobile comprenant une unité de contrôle électronique comprenant des moyens matériels et logiciels adaptés pour mettre en œuvre un procédé de détection tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un premier véhicule automobile selon un mode de réalisation de l'invention.
La figure 2 est une représentation schématique d'une configuration routière ordinaire.
La figure 3 est une représentation schématique d'une première configuration routière dans laquelle le premier véhicule circule à contresens.
La figure 4 est un logigramme d'un procédé de détection d'un état de circulation à contresens selon un premier mode de réalisation de l'invention.
La figure 5 est une représentation schématique d'une deuxième configuration routière dans laquelle un deuxième véhicule circule à contresens, le deuxième véhicule étant distinct du premier véhicule.
La figure 6 est un logigramme d'un procédé de détection d'un état de circulation à contresens selon un deuxième mode de réalisation de l'invention.

### Description détaillée

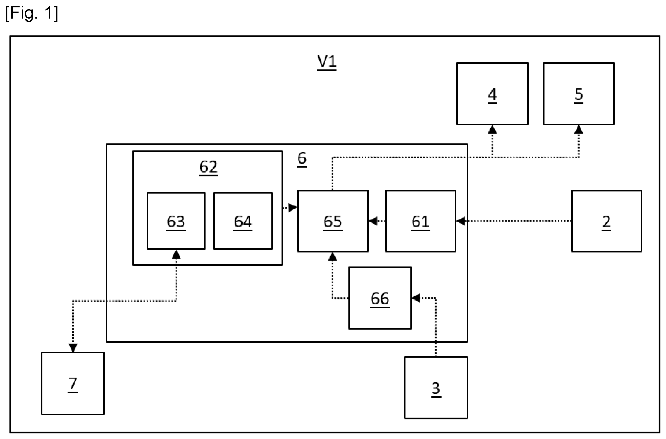

La figure 1 illustre schématiquement un premier véhicule V1 automobile selon un mode de réalisation de l'invention. Le véhicule V1 peut être, par exemple, un véhicule particulier, un véhicule utilitaire, un camion, une moto ou même un bus.

Le véhicule V1 comprend un moyen d'observation 2 de l'environnement du véhicule. Le moyen d'observation 2 est configuré pour observer une scène à l'avant du véhicule. Le moyen d'observation 2 est apte à fournir de manière instantanée ou quasi-instantanée un flux d'images successives, représentatives de l'environnement du véhicule. Le moyen d'observation 2 peut comprendre une caméra, notamment une caméra optique dont le champ de vision est orienté vers l'avant du véhicule. Alternativement ou en complément, le moyen d'observation 2 peut comprendre un radar, et/ou un lidar, et/ou une caméra infrarouge.

Le véhicule V1 comprend également un moyen de géolocalisation 3. Le moyen de géolocalisation 3 est configuré pour fournir une donnée numérique représentative d'une position courante du véhicule. En particulier, le moyen de géolocalisation 3 est apte à fournir de manière instantanée ou quasi-instantanée des coordonnées géographiques représentatives de la position courante du véhicule. Le moyen de géolocalisation 3 peut être de type « Global Navigation Satellite System » (GNSS) et/ou « Global Positioning System » (GPS) ou équivalent : il peut être configuré pour réceptionner des signaux émis par des satellites, et pour calculer lesdites coordonnées géographiques par triangulation. Le moyen de géolocalisation 3 peut présenter une incertitude de positionnement, c'est-à-dire un écart entre les coordonnées géographiques qu'il fournit et les coordonnées géographiques réelles du véhicule. L'incertitude de positionnement peut être comprise entre quelques dizaines de centimètres et une dizaine de mètres, par exemple environ 3 mètres. L'incertitude de positionnement peut être dépendante des conditions de réception des signaux émis par les satellites. En particulier, la présence de reliefs autours du véhicule peut engendrer des réflexions qui dégradent la précision des coordonnées géographiques fournies par le moyen de géolocalisation 3.

Le véhicule V1 comprend aussi une interface 4 de communication apte à transmettre des informations à un utilisateur du véhicule. L'interface 4 est notamment apte à afficher des messages et/ou apte à émettre des sons et/ou apte à générer toute autre forme de stimuli adapté pour attirer l'attention de l'utilisateur. L'interface 4 peut être intégrée à une planche de bord du véhicule. Alternativement ou en complément, le véhicule V1 peut comprendre des moyens de contrôle 5 aptes à contrôler automatiquement la trajectoire et/ou la vitesse du véhicule.

Enfin, le véhicule V1 comprend une unité de contrôle électronique 6. L'unité de contrôle électronique 6 est connectée au moyen d'observation 2, au moyen de géolocalisation 3, et le cas échéant à l'interface 4 et/ou aux moyens de contrôle 5. En particulier, l'unité de contrôle électronique 6 est configurée pour recevoir des signaux numériques fournis par le moyen d'observation 2 et par le moyen de géolocalisation 3. L'unité de contrôle électronique 6 est également configurée pour émettre des signaux numériques à destination de l'interface 4 et/ou des moyens de contrôle 5.

L'unité de contrôle électronique 6 comprend un module d'interprétation 61 apte à interpréter une image et/ou un signal vidéo fourni par le moyen d'observation 2. Le module d'interprétation 61 peut comprendre des moyens de reconnaissance optique adaptés pour identifier différents objets statiques ou dynamiques. Le module d'interprétation 61 peut notamment être configuré pour identifier d'autres véhicules présents dans le champ d'observation du moyen d'observation 2. Le module d'interprétation 61 peut également être configuré pour identifier des objets statiques parmi lesquels des éléments d'accotement tels que des limites de revêtement, des lignes de démarcation peintes sur le sol, des rambardes, des glissières de sécurité, des barrières, des talus ou des terrepleins. Le module d'interprétation 61 peut également être configuré pour identifier des éléments de signalisation. Les éléments de signalisation peuvent comprendre des motifs peints sur le sol et/ou des panneaux de signalisation. Les panneaux de signalisation peuvent être, par exemple, des panneaux d'interdiction ou des panneaux directionnels. En particulier, le module d'interprétation 61 est configuré pour identifier des panneaux de sens interdit. Un panneau de sens interdit comprend généralement une forme circulaire, un fond rouge, et une bande horizontale blanche recouvrant le fond rouge.

Le module d'interprétation 61 est également configuré pour identifier des équipements de travaux, tel qu'un cône de chantier, des marquages temporaires, des barrières temporaires, des panneaux de signalisation de travaux, ou encore des engins de chantier. Un cône de chantier peut être un élément de forme globalement conique comprenant une hauteur comprise entre 50cm et 1m, et de couleur principale orange ou jaune. Un cône de chantier peut comprendre une ou plusieurs bandes horizontales de couleur blanche et/ou pourvue d'un revêtement réfléchissant. Les marquages temporaires peuvent comprendre des lignes ou tout autres motifs peints sur le sol, de préférence avec une peinture de couleur jaune. Les barrières temporaires peuvent comprendre une série d'éléments posés sur le sol avec une alternance de couleur rouge et blanche. Les engins de chantier peuvent comprendre des pelles mécaniques et/ou des rouleaux compresseurs. Les panneaux de signalisation de travaux peuvent comprendre un fond jaune et/ou un pictogramme représentant des travaux et/ou des inscriptions indiquant la présence de travaux. Selon un mode de réalisation, le module d'interprétation 61 peut être adapté pour lire les inscriptions sur des panneaux de signalisation de travaux, et notamment pour identifier des mots tels que « travaux », « chantier » ou « déviation » (ou leurs équivalents dans la langue du pays concerné). Les panneaux de signalisation peuvent être des panneaux électriques, notamment des panneaux équipés d'un feu clignotant. Le module d'interprétation 61 peut être adapté pour reconnaitre un tel feu clignotant.

L'unité de contrôle électronique 6 comprend aussi une mémoire 62. La mémoire 62 contient des données cartographiques 63 sous forme numérique. Les données cartographiques 63 peuvent, par exemple, contenir des cartes vectorielles et/ou des cartes matricielles représentatives d'une infrastructure routière. Les données cartographiques 63 peuvent contenir la définition de l'ensemble des routes carrossables sur un territoire donné, par exemple à l'échelle d'un pays. Chaque route carrossable peut être définie par des coordonnées géographiques mais également par sa nature, par exemple son type de revêtement, son nombre de voies de circulation, ou encore sa dénomination.

En remarque, l'ensemble des données cartographiques 63 n'est pas nécessairement stocké dans la mémoire 62 de l'unité de contrôle électronique 6. Selon un mode de réalisation, l'unité de contrôle électronique 6 comprend des moyens de communications sans fil permettant de charger les données cartographiques en fonction de la position courante du véhicule. Les données cartographiques peuvent ainsi comprendre des données particulièrement détaillées et actuelles concernant les routes carrossables et leurs équipements dans l'environnement du véhicule. Par « mémoire 62 » on comprend donc également une mémoire de type mémoire vive et/ou de type mémoire volatile. Les données cartographiques peuvent être mémorisées temporairement dans la mémoire 62 pour la mise en œuvre du procédé de détection selon l'invention puis être effacées dès que la mémoire n'est plus sous tension.

En particulier, les données cartographiques 63 peuvent contenir une identification des routes à double sens à chaussées séparées. Une route à double sens à chaussées séparées désigne une route comprenant deux chaussées distinctes séparées l'une de l'autre par un élément de séparation. Les deux chaussées s'étendent parallèlement l'une à l'autre et sont distantes l'une de l'autre par au plus quelques mètres. L'élément de séparation peut comprendre par exemple une barrière, et/ou une glissière de sécurité, et/ou un terreplein central. Le terreplein central peut être en relief ou au contraire être plat. Le terreplein central peut être par exemple recouvert d'herbe et/ou de gravier et/ou comprendre des ornements tels que des massifs floraux. Un élément de séparation est destiné à empêcher un franchissement entre les deux voies de circulation. A cet effet, il comprend une structure physique infranchissable par un véhicule sans endommagement ou sans ralentissement. Une route à double sens à chaussées séparées peut notamment être une autoroute ou une voie rapide. Avantageusement, les données cartographiques 63 contiennent également une information relative au sens de circulation théorique de chaque chaussée. Ce sens de circulation théorique est le sens de circulation pour lequel la chaussée est prévue. Si un véhicule emprunte une chaussée dans le sens inverse du sens de circulation théorique, il circule à contresens et s'expose à un risque de choc frontal avec un autre automobiliste.

L'unité de contrôle électronique 6 comprend en outre un module de positionnement 66, que l'on pourrait également dénommer avec l'anglicisme module de « map matching ». Le module de positionnement 66 est configuré pour calculer une position estimée du véhicule en fonction des coordonnées géographiques fournies par le moyen de géolocalisation 3 et en fonction des données cartographiques 63. En particulier, le module de positionnement 66 calcule ladite position estimée par une projection des coordonnées géographiques fournies par le moyen de géolocalisation 3 sur la chaussée la plus proche des coordonnées géographiques fournies par le moyen de positionnement et dont le sens de circulation théorique correspond au sens de circulation effectif du véhicule. Cette projection peut comprendre l'identification d'un point de ladite chaussée pour lequel la distance avec les coordonnées géographiques fournies par le moyen de positionnement est la plus faible. Le sens de circulation effectif peut être calculé par le module de positionnement 66 en considérant au moins deux coordonnées géographiques successives fournies par le moyen de géolocalisation 3 et/ou au moyen d'un capteur d'accélération et/ou au moyen d'une centrale inertielle et/ou au moyen de tout autre capteur équivalent embarqué dans le véhicule. Le sens de circulation théorique fait partie des données cartographiques comme expliqué précédemment. Par construction, la position estimée calculée par le module de positionnement 66 est donc toujours une position dans laquelle le véhicule 1 circule dans le bon sens de circulation, c'est-à-dire pas à contresens. La position estimée ne peut donc pas être utilisée directement pour déterminer si le véhicule 1 circule à contresens.

Optionnellement, le véhicule V1 comprend également un moyen de communication 7 sans fil connecté à l'unité de contrôle électronique 6. Le moyen de communication 7 peut être configuré pour émettre et/ou pour réceptionner des données numériques émises via un réseau de téléphonie mobile. Le moyen de communication 7 peut comprendre, par exemple, une antenne et/ou un moyen de connexion avec un Smartphone. Un service d'actualisation des données cartographiques destiné à signaler la présence de travaux peut émettre des informations qui sont réceptionnées par l'unité de contrôle électronique 6 afin de mettre à jour les données cartographiques 63. Les données cartographiques 63 peuvent ainsi être régulièrement mises à jour avec des informations relatives à des zones géographiques concernées par des travaux.

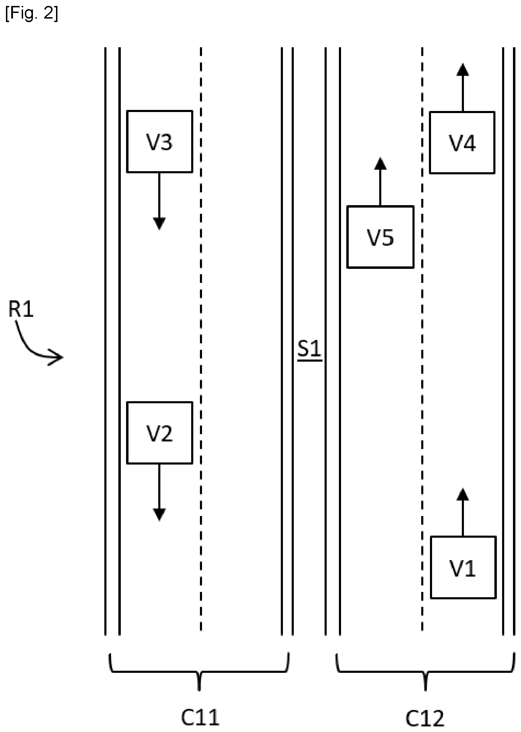

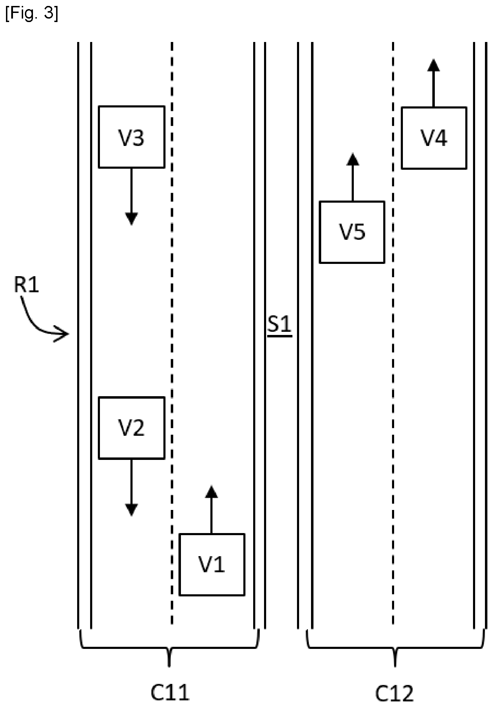

Les figures 2 et 3 illustrent le véhicule V1 circulant sur une route R1 à double sens et à chaussées séparées. La route R1 comprend deux chaussées C11 et C12. Chaque chaussée comprend deux voies de circulation. Ces voies de circulation sont délimitées par des lignes de démarcation continues ou pointillées. Un élément de séparation S1 sépare les deux chaussées C11 et C12. La configuration illustrée sur la figure 3 est représentative d'un pays avec « conduite à droite ». L'invention pourrait néanmoins être transposée à un pays avec conduite à gauche. La route est non seulement empruntée par le véhicule V1, mais également par un ensemble d'autres véhicules V2, V3, V4, V5. Pour chaque véhicule une flèche indique le sens dans lequel le véhicule se dirige. La configuration illustrée sur la figure 2 est une configuration ordinaire : chaque véhicule circule conformément au sens de circulation théorique de la chaussée sur laquelle il se situe. Inversement, la configuration routière illustrée sur la figure 3 est une configuration où le véhicule V1 circule à contresens

La mémoire 62 contient également un programme informatique 64 contenant des instructions de code de programme de mise en œuvre d'un procédé de détection d'un état de circulation à contresens selon un mode de réalisation de l'invention. L'unité de contrôle électronique 6 comprend un microprocesseur 65 apte à exécuter ce programme d'ordinateur.

En remarque, le module d'interprétation 61, la mémoire 62, les données cartographiques 63, le programme informatique 64, le microprocesseur 65 et le module de positionnement 66 sont, selon le mode de réalisation présenté, intégrés à une même unité de contrôle électronique 6. Selon d'autres variantes de réalisation, une partie de ces éléments pourrait être intégrée dans une ou plusieurs unités de contrôle électronique secondaires, embarquées dans le véhicule 1, et connectées à l'unité de contrôle électronique 6. Par exemple, le module de positionnement 66 pourrait être intégré à un système de géolocalisation auquel l'unité de contrôle électronique 6 est connectée. Tout ou partie des moyens logiciels, notamment le module d'interprétation 61, les données cartographiques 63, le programme informatique 64 ou encore le module de positionnement 66 pourraient aussi être partiellement ou complètement externalisés sur un serveur distant auquel le véhicule 1 est connecté.

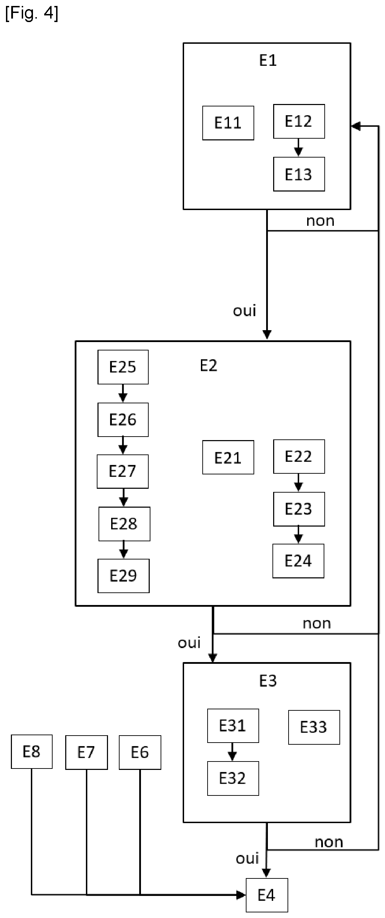

On décrit à présent le premier mode de réalisation du procédé de détection d'un état de circulation à contresens en relation avec le logigramme illustré sur la figure 4. Le procédé est mis en œuvre alors que le véhicule V1 est en train de circuler à contresens sur la route la chaussée C11 de la route R1 comme illustré sur la figure 3. Le procédé vise donc à détecter l'état de circulation à contresens du véhicule V1.

Le procédé de détection comprend principalement quatre étapes E1, E2, E3, E4. Lors de chacune des trois étapes E1, E2 et E3 un test est effectué. La quatrième étape E4, laquelle consiste à signaler un état de circulation à contresens, est exécutée si les trois tests correspondants aux étapes E1, E2 et E3 sont positifs. Les étapes E1, E2 et E3 peuvent être effectuées en parallèle ou séquentiellement. Comme cela est illustré sur la figure 4, on peut effectuer la première étape, puis la deuxième étape E2, puis la troisième étape E3. En variante, tout autre ordre d'exécution des trois étapes E1, E2 et E3 pourrait être envisagé. Les termes d'énumération tels que « premier », deuxième » ou « troisième » ne visent donc pas à définir un ordre particulier entre les étapes mais uniquement à distinguer des étapes différentes du procédé de détection.

Lors de la première étape E1, on contrôle, c'est-à-dire on vérifie, que le véhicule V1 circule sur une route à double sens et à chaussées séparées. Si le véhicule V1 circule bien sur une route à double sens et à chaussées séparées, le procédé de détection peut être poursuivi. En revanche, si le véhicule V1 circule sur une route à double sens sur laquelle les deux chaussées ne sont pas séparées ou séparées uniquement par une ligne de démarcation peinte sur le sol, le procédé peut être réinitialisé, c'est-à-dire que la première étape E1 sera répétée jusqu'à ce que le véhicule V1 circule bien sur une route à double sens et à chaussées séparées. De même, si le véhicule V1 circule sur une route à sens unique, le procédé peut être réinitialisé.

Selon un mode de réalisation, la première étape E1 comprend une étape E11 de contrôle, avec le moyen d'observation 2, de la présence de la première chaussée C11, de la deuxième chaussée C12 et de l'élément de séparation S1 séparant la première chaussée de la deuxième chaussée. En particulier, le module d'interprétation 61 peut identifier les chaussées C11, C12 et l'élément de séparation S1 et leurs positions relatives. On vérifie alors que l'élément de séparation s'étend entre les deux chaussées C11, C12.

Alternativement ou en complément, la première étape E1 comprend une étape E12 de détermination de coordonnées géographiques représentatives de la position courante du véhicule avec le moyen de géolocalisation 3, puis une étape E13 de projection desdites coordonnées géographiques sur les données cartographiques 63. Le module de positionnement 66 peut être utilisé à cet effet. On détermine alors la route sur laquelle circule le véhicule. Cette route peut notamment être définie comme la route répertoriée dans les données cartographiques 63 qui est la plus proche des coordonnées géographiques fournies par le moyen de géolocalisation 3. On peut ensuite déduire des informations cartographiques le type de la route sur laquelle circule le véhicule, et notamment confirmer si cette route est une route à double sens et à chaussées séparées.

Si la route sur laquelle circule le véhicule V1 est une route à double sens et à chaussées séparées, on poursuit le procédé avec la deuxième étape E2. Lors de la deuxième étape E2, on contrôle l'absence de travaux dans l'environnement du véhicule V1. En effet, lorsque des travaux sont réalisés sur une route à double sens à chaussées séparées, il arrive fréquemment qu'une des deux chaussées soit condamnée et que les automobilistes qui étaient destinés à emprunter cette chaussée soient déroutés vers l'autre chaussée. Si la présence de travaux est confirmée, le procédé peut être réinitialisé, c'est-à-dire que le procédé de détection sera recommencé depuis son début. On évite ainsi de générer des fausses détections liées au déroutage des automobilistes. Avantageusement, le procédé de détection pourra être réinitialisé après une durée prédéfinie et/ou après que le véhicule a parcouru une distance prédéfinie consécutivement à la confirmation de la présence de travaux. On évite ainsi de générer des fausses détections liées au déroutage des automobilistes quand bien même aucun signe indiquant la présence de travaux n'est observable dans le champ d'observation du moyen d'observation. Alternativement ou en complément, le procédé peut être automatiquement réinitialisé si le moyen d'observation détecte un objet signalant explicitement la fin d'une zone de travaux.

Selon un mode de réalisation, la deuxième étape E2 comprend une étape E21 de contrôle, avec le moyen d'observation 2 de l'absence d'équipements de travaux tels que des cônes de chantier, des marquages temporaires, des barrière temporaires, des panneaux de signalisation de travaux, ou encore des engins de travaux. En particulier, le module d'interprétation 61 peut être utilisé à cet effet : si au moins un équipement de travaux est détecté par le module d'interprétation 61, le procédé peut être réinitialisé.

Alternativement ou en complément, la deuxième étape E2 comprend une étape E22 d'actualisation des données cartographiques 63 avec un service d'actualisation destiné à signaler la présence de travaux. Le moyen de communication 7 peut être utilisé à cet effet. L'étape E22 permet de définir un ensemble de zones géographiques concernées par des travaux. Ensuite la deuxième étape E2 comprend une étape E23 de détermination des coordonnées géographiques représentatives de la position courante du véhicule avec le moyen de géolocalisation 3 et notamment avec le module de positionnement 66, puis une étape E24 de projection desdites coordonnées géographiques sur les données cartographiques 63. Il suffit alors de vérifier que les coordonnées géographiques représentatives de la position courante du véhicule ne se trouvent pas à l'intérieur d'une zone géographique concernée par des travaux.

Alternativement ou en complément, la deuxième étape E2 peut comprendre une étape E25 d'émission, par un moyen de communication embarqué dans le véhicule et connecté à l'unité de contrôle électronique 6, d'un signal contenant une donnée relative à la position courante du véhicule. Le moyen de communication 7 peut être utilisé à cet effet. La position courante peut notamment être codée sous forme de coordonnées géographiques fournies par le moyen de géolocalisation 3, et notamment par le module de positionnement 66. La deuxième étape E2 comprend ensuite une détape E26 de réception, par un serveur distant, de la donnée relative à la position courante du véhicule, puis une étape E27 de projection desdites coordonnées géographiques sur les données cartographiques enregistrées dans une mémoire du serveur distant, lesdites données cartographiques contenant des informations relatives à des zones géographiques concernées par des travaux. Le serveur distant vérifie alors que les coordonnées géographiques représentatives de la position courante du véhicule ne se trouvent pas à l'intérieur d'une zone géographique concernée par des travaux. Ensuite, la deuxième étape E2 comprend une étape E28 d'émission, par le serveur distant, d'une information binaire indiquant si, oui ou non, le véhicule 1 se trouve à l'intérieur d'une zone géographique concernée par des travaux, puis une étape E29 de réception, par le moyen de communication connecté à l'unité de contrôle électronique 6, de ladite information binaire. Le moyen de communication 7 peut également être utilisé à cet effet.

Si aucune zone de travaux dans l'environnement du véhicule V1 n'est détectée, on poursuit le procédé avec la troisième étape E3. Lors de la troisième étape E3, on contrôle la présence d'au moins un deuxième véhicule V2 circulant sur la même chaussée que le véhicule V1 et circulant dans un sens opposé au sens de circulation du véhicule V1. Dans la configuration illustrée sur la figure 3, le véhicule V1 va donc être amené à détecter la présence du véhicule V2 ou du véhicule V3 circulant dans le sens opposé au sens de circulation du véhicule V1.

En particulier, la troisième étape peut comprendre une étape E31 de calcul d'une vitesse de rapprochement entre le véhicule V1 et le deuxième véhicule V2 avec le moyen d'observation 2. Avantageusement, le moyen d'observation 2 est apte à déterminer une distance séparant le véhicule V1 du deuxième véhicule V2. En calculant une variation temporelle de cette distance, on déduit la vitesse de rapprochement entre le véhicule V1 et le deuxième véhicule V2. Ensuite, dans une étape E32, on peut comparer la vitesse de rapprochement avec la vitesse du véhicule V1. La vitesse du véhicule V1 peut être calculée, par exemple, au moyen de capteurs de vitesse de rotation des roues du véhicule V1 et/ou avec le moyen de géolocalisation 3. Si la vitesse de rapprochement est strictement inférieure à la vitesse du véhicule V1, alors le deuxième véhicule V2 circule dans le même sens que le véhicule V1. Si la vitesse de rapprochement est strictement supérieure à la vitesse du véhicule V1, alors le deuxième véhicule V2 circule dans le sens contraire du véhicule V1.

Alternativement ou en complément, la troisième étape peut comprendre une étape E33 de reconnaissance optique d'une face avant du deuxième véhicule V2. Par exemple, le module d'interprétation 61 peut être configuré pour distinguer une face avant d'une face arrière d'un véhicule automobile, par exemple en appréciant la couleur des dispositifs lumineux de ce véhicule (généralement blanche à l'avant et rouge à l'arrière). Si le module d'interprétation détecte la face avant du deuxième véhicule, alors on pourra confirmer une circulation du deuxième véhicule en sens inverse du premier véhicule.

Si on détecte un deuxième véhicule circulant sur la même chaussée que le véhicule V1 et dans un sens opposé au sens de circulation du véhicule V1, un état de circulation à contresens est confirmé et le procédé peut aussitôt être poursuivi avec la quatrième étape E4. Lors de la quatrième étape E4, on signale un état de circulation à contresens. Lors de la quatrième étape E4, un signal peut être émis par l'unité de contrôle électronique 6 à l'interface 4 et/ou aux moyens de contrôle 5. En particulier, un message d'alerte peut être affiché sur un écran et/ou un son peut être produit pour alerter le conducteur du véhicule V1 d'un danger imminent. Alternativement ou en complément, les moyens de contrôle 5 peuvent freiner le véhicule et/ou modifier sa trajectoire pour réduire le risque d'une collision frontale.

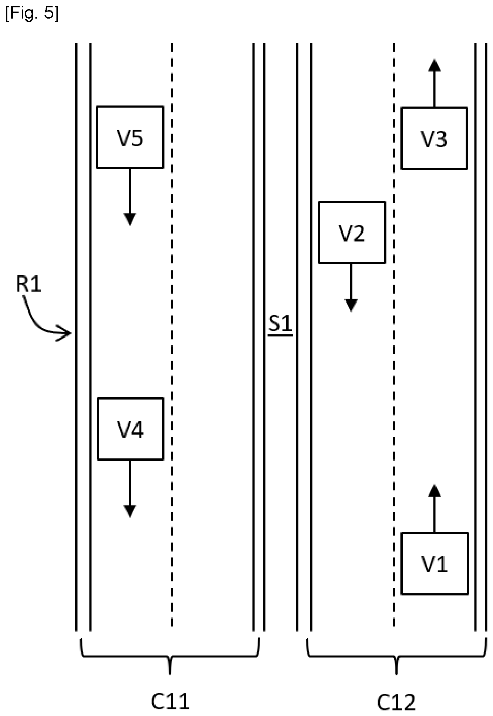

Lorsque le véhicule V1 détecte un unique deuxième véhicule circulant sur la même chaussée que le véhicule V1 et dans un sens opposé au sens de circulation du véhicule V1, un état de circulation à contresens est confirmé. Toutefois, deux configurations sont encore possibles : soit c'est le véhicule V1 qui circule à contresens, soit c'est le deuxième véhicule V2 qui circule à contresens. La figure 5 illustre, par exemple, une configuration où le véhicule V1 circule dans le bon sens et le véhicule V2 circule à contresens sur la chaussée C12. Bien que ces deux configurations soient très graves et méritent la signalisation urgente d'un état de circulation à contresens, il peut être utile de parvenir à distinguer ces deux configurations.

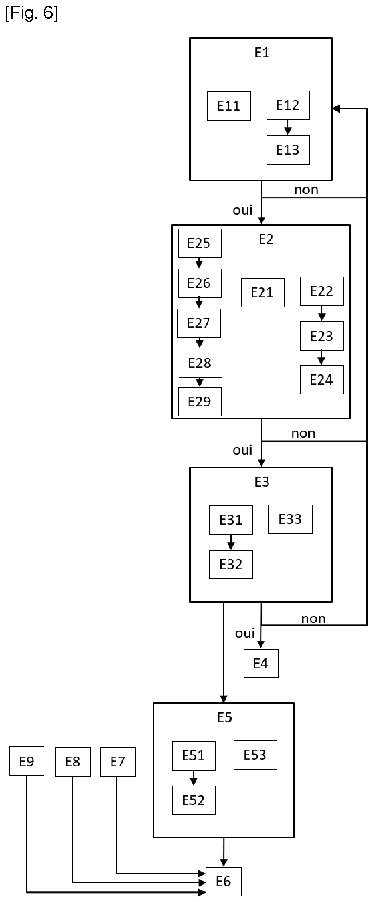

L'invention prévoit ainsi un perfectionnement permettant de distinguer les cas où c'est le véhicule V1 qui circule à contresens des cas où c'est un autre véhicule que le véhicule V1 qui circule à contresens. Le logigramme de la figure 6 illustre un deuxième mode de réalisation du procédé de détection permettant d'apporter une telle distinction. Selon cette variante de réalisation du procédé de détection, les étapes E1, E2, E3 et E4 sont identiques aux étapes du premier mode de réalisation précédemment décrit. Consécutivement à la troisième étape E3, le procédé de détection comprend une cinquième étape E5 de contrôle de présence d'un troisième véhicule circulant sur la même chaussée que le véhicule V1 et circulant dans un sens opposé au sens de circulation du véhicule V1.

La cinquième étape E5 peut être analogue à la troisième étape précédemment décrite. La cinquième étape E5 peut notamment comprendre une étape E51 de calcul d'une vitesse de rapprochement entre le véhicule V1 et le troisième véhicule V3 avec le moyen d'observation 2, puis une étape E52 de comparaison de la vitesse de rapprochement du troisième véhicule V3 avec la vitesse du véhicule V1. La cinquième étape E5 peut comprendre une étape E53 de reconnaissance optique d'une face avant du troisième véhicule V3. Les étapes E51, E52 et E53 peuvent être analogues aux étapes E31, E32 et E33 précédemment décrites.

Finalement, si un troisième véhicule circule sur la même chaussée que le véhicule V1 et dans un sens opposé au sens de circulation du véhicule V1, alors on peut confirmer que c'est le véhicule V1 qui circule à contresens. Inversement si le troisième véhicule circule sur la même chaussée que le véhicule V1 et dans le même sens que le véhicule V1, alors on peut confirmer que c'est le deuxième V2 qui circule à contresens.

Dans une sixième étape E6, on peut signaler lequel parmi le véhicule V1 et le deuxième véhicule V2 circule à contresens. On peut notamment adapter un message d'alerte affiché sur un écran du véhicule V1 et/ou adapter une prise de contrôle automatique du véhicule V1 en fonction du véhicule circulant à contresens. En remarque, la cinquième étape E5 peut être réalisée avant, après ou en parallèle de la quatrième étape E4. Avantageusement, l'étape E4 précède les étapes E5 et E6. Ainsi, on n'attend pas la détection d'un troisième véhicule pour alerter le conducteur d'un état de circulation à contresens.

En complément de ce qui précède, le procédé de détection peut comprendre des contrôles supplémentaires visant à fiabiliser la détection d'un état de circulation à contresens. Selon un mode de réalisation, le procédé de détection peut comprendre en outre une étape E7 de détection d'un marquage au sol indiquant un état de circulation à contresens, avec le moyen d'observation 2. Le marquage au sol peut comprendre, par exemple une flèche pointant vers l'arrière du véhicule. La flèche peut être dans la même voie de circulation que celle sur laquelle circule le véhicule V1. La flèche peut être détectée par le moyen d'interprétation 61.

Alternativement à l'étape E7 ou en complément de l'étape E7, le procédé de détection peut comprendre en outre une étape E8 de détection d'une face arrière d'un panneau de signalisation avec le moyen d'observation 2. La face arrière d'un panneau de signalisation est généralement une face dépourvue de toute inscription, de couleur uniforme, notamment de couleur grise puisque les panneaux de signalisation comprennent généralement un support en aluminium. Ainsi la détection d'une forme circulaire ou triangulaire ou rectangulaire de couleur grise peut être détectée par le moyen d'interprétation 61, puis interprétée comme un indice d'un état de circulation à contresens.

Alternativement à l'étape E7 et/ou à l'étape E8 ou en complément de l'étape E7 et/ou de l'étape E8, le procédé de détection peut comprendre en outre une étape E9 de détection d'un premier panneau de sens interdit et d'un deuxième panneau de sens interdit de part et d'autre d'une trajectoire courante du véhicule avec le moyen d'observation 2. Avantageusement, l'étape E9 peut comprendre une sous étape de vérification d'une distance maximale séparant le premier panneau de sens interdit du deuxième panneau de sens interdit. Cette distance maximale peut être par exemple fixée à dix mètres. Si un premier panneau de sens interdit et un deuxième panneau de sens interdit de part et d'autre d'une trajectoire courante du véhicule, distant l'un de l'autre d'une distance inférieure ou égale à la distance maximale est détecté avec le moyen d'observation 2, alors on peut confirmer que le véhicule 1 circule à contresens. Comme expliqué précédemment, la détection d'un seul panneau de sens interdit ou de plusieurs panneaux de sens interdit du même côté de la trajectoire du véhicule conduirait à de nombreuses fausses détections. En revanche la détection de deux panneaux de sens interdit de part et d'autre de la trajectoire du véhicule peut être interprété comme un indice convainquant d'un état de circulation à contresens. Finalement, grâce à l'invention, on dispose d'un procédé de détection d'un état de circulation à contresens simple à mettre en œuvre. Le procédé est basé sur l'utilisation d'un moyen d'observation 2 et/ou d'un moyen de géolocalisation 3 combiné avec des données cartographiques 63 mémorisées dans la mémoire d'une unité de contrôle électronique. Il s'agit de moyens relativement simples dont la plupart des véhicules sont déjà équipés. L'invention présente l'avantage de détecter aussi bien des situations ou c'est le véhicule qui met en œuvre le procédé de détection qui roule à contresens, que des situations où c'est un autre véhicule qui circule à contresens. Grâce à l'invention, des accidents peuvent être évités. Le procédé de détection qui vient d'être décrit est particulièrement performant pour détecter des états de circulation à contresens sur des voies rapides ou sur des autoroutes.

## Revendications

1. Procédé de détection d'un état de circulation à contresens, **caractérisé en ce qu'**il comprend :
- une première étape (E1) de contrôle de la circulation d'un premier véhicule (V1) sur une route (R1) à double sens et à chaussées séparées,
la première étape (E1) comprenant une étape (E11) de contrôle, avec un moyen d'observation (2) de l'environnement qui est embarqué dans le premier véhicule, de la présence d'une première chaussée (C11), d'une deuxième chaussée (C12), et d'un élément de séparation (S1) tel qu'une rambarde, une glissière, une barrière ou un terreplein, l'élément de séparation séparant la première chaussée de la deuxième chaussée, et
- une deuxième étape (E2) de contrôle d'absence de travaux dans l'environnement du premier véhicule, et
- une troisième étape (E3) de contrôle de présence d'un deuxième véhicule (V2) circulant sur la même chaussée (C12) que le premier véhicule et circulant dans un sens opposé au sens de circulation du premier véhicule, puis
- si la circulation du premier véhicule sur une route à double sens et à chaussées séparées est confirmée, et si l'absence de travaux dans l'environnement du premier véhicule est confirmée, et si la présence d'un deuxième véhicule circulant sur la même chaussée que le premier véhicule et circulant dans un sens opposé au sens de circulation du premier véhicule est confirmée, une quatrième étape (E4) de signalisation d'un état de circulation à contresens.

2. Procédé de détection selon la revendication précédente, **caractérisé en ce que** la première étape (E1) comprend une étape (E12) de détermination de coordonnées géographiques représentatives de la position courante du véhicule avec un moyen de géolocalisation (3) embarqué dans le premier véhicule, puis une étape (E13) de projection desdites coordonnées géographiques sur des données cartographiques (63) enregistrées dans une mémoire d'une unité de contrôle électronique (6) embarquée dans le premier véhicule, les données cartographiques contenant des informations relatives au type de route empruntée par le premier véhicule.

3. Procédé de détection selon l'une des revendications précédentes, **caractérisé en ce que** la deuxième étape (E2) comprend une étape (E21) de contrôle, avec un moyen d'observation (2) de l'environnement embarqué dans le premier véhicule, de l'absence d'équipements de travaux tels que des cônes de chantier, des marquages temporaires, des barrière temporaires, des panneaux de signalisation de travaux ou des engins de travaux.

4. Procédé de détection selon l'une des revendications précédentes, **caractérisé en ce que** la deuxième étape (E2) comprend :
- une étape (E22) d'actualisation de données cartographiques (63) enregistrées dans une mémoire d'une unité de contrôle électronique (6) embarquée dans le premier véhicule avec un service d'actualisation destiné à signaler la présence de travaux, puis
- une étape (E23) de détermination de coordonnées géographiques représentatives de la position courante du véhicule avec un moyen de géolocalisation (3) embarqué dans le premier véhicule, puis
- une étape (E24) de projection desdites coordonnées géographiques sur les données cartographiques (63).

5. Procédé de détection selon l'une des revendications précédentes, **caractérisé en ce que** la deuxième étape (E2) comprend :
- une étape (E25) d'émission, par un moyen de communication (7) embarqué dans le véhicule, d'un signal contenant des coordonnées géographiques représentatives d'une position courante du véhicule, puis
- une étape (E26) de réception, par un serveur distant, des coordonnées géographiques, puis
- une étape (E27) de projection desdites coordonnées géographiques sur des données cartographiques enregistrées dans une mémoire du serveur distant, lesdites données cartographiques contenant des informations relatives à des zones géographiques concernées par des travaux, puis
- une étape (E28) d'émission, par le serveur distant, d'une information binaire indiquant si le véhicule (1) se trouve à l'intérieur d'une zone géographique concernée par des travaux, puis
- une étape (E29) de réception, par le moyen de communication (7), de ladite information binaire.

6. Procédé de détection selon l'une des revendications précédentes, **caractérisé en ce que** la troisième étape comprend une étape (E31) de calcul d'une vitesse de rapprochement entre le premier véhicule et le deuxième véhicule avec un moyen d'observation (2) de l'environnement embarqué dans le premier véhicule, puis une étape (E32) de comparaison de la vitesse de rapprochement avec la vitesse du premier véhicule.

7. Procédé de détection selon l'une des revendications précédentes, **caractérisé en ce que** la troisième étape comprend une étape (E33) de reconnaissance optique d'une face avant du deuxième véhicule.

8. Procédé de détection selon l'une des revendications précédentes, **caractérisé en ce qu'**il comprend, suite à la troisième étape (E3)
- une cinquième étape (E5) de contrôle de présence d'un troisième véhicule (V3) circulant sur la même chaussée que le premier véhicule (V1) et circulant dans un sens opposé au sens de circulation du premier véhicule, puis
- si la présence d'un troisième véhicule circulant sur la même chaussée que le premier véhicule et circulant dans un sens opposé au sens de circulation du premier véhicule est confirmée, une sixième étape (E6) de signalisation d'un état de circulation à contresens du premier véhicule (V1) ou, si la présence d'un troisième véhicule circulant sur la même chaussée que le premier véhicule et circulant dans le même sens de circulation que le premier véhicule est confirmée, une sixième étape (E6) de signalisation d'un état de circulation à contresens du deuxième véhicule (V2).

9. Procédé de détection selon l'une des revendications précédentes, **caractérisé en ce qu'**il comprend en outre :
- une étape (E7) de détection d'un marquage au sol indiquant un état de circulation à contresens avec un moyen d'observation (2) de l'environnement embarqué dans le véhicule, et/ou
- une étape (E8) de détection d'une face arrière d'un panneau de signalisation avec un moyen d'observation (2) de l'environnement embarqué dans le véhicule, et/ou
une étape (E9) de détection d'un premier panneau de sens interdit et d'un deuxième panneau de sens interdit de part et d'autre d'une trajectoire courante du véhicule avec un moyen d'observation de l'environnement embarqué dans le véhicule.

10. Véhicule (1) automobile comprenant une unité de contrôle électronique (6) comprenant des moyens matériels et logiciels (61, 62, 63, 64, 65) adaptés pour mettre en œuvre un procédé de détection selon l'une des revendications précédentes.
